**Europäisches Patentamt**

**European Patent Office**

**Office européen des brevets**

(19)

(11) Publication number: **0 096 677**

**B1**

(12) **EUROPEAN PATENT SPECIFICATION**

(45) Date of publication of patent specification: **08.10.86**

(51) Int. Cl.⁴: **H 04 N 1/06, H 02 K 41/02**

(21) Application number: **83870050.8**

(22) Date of filing: **31.05.83**

(54) An automatic scanning device and its control for opto-mechanical processing applications.

(30) Priority: **04.06.82 LU 84183**

(43) Date of publication of application:
**21.12.83 Bulletin 83/51**

(45) Publication of the grant of the patent:
**08.10.86 Bulletin 86/41**

(84) Designated Contracting States:
**DE FR GB**

(56) References cited:
**EP-A-0 052 346**
**DE-A-2 409 476**
**DE-A-3 014 409**
**GB-A-2 049 300**
**US-A-3 938 191**

**PROCEEDINGS OF THE SOCIETY FOR
INFORMATION DISPLAY, vol. 11, no. 1, 1st
term 1970, pages 16-29, Los Angeles, USA S.
DAVIS: "A technical survey of digital plotters"**

(73) Proprietor: **DIGITIZED INFORMATION
SYSTEMS CORPORATION, in verkorting D.I.S.C.
Nieuwevaart 153
B-9000 Gent (BE)**

(72) Inventor: **Van Campenhout, Jan
Borgtstraat 11a
B-1850 Grimbergen (BE)**
Inventor: **De Stecker, Hans
Tulpenlaan 16
B-9130 Lochristi (BE)**
Inventor: **Notredame, Paul
Klimoplaan 10
B-9030 Wondelgem (BE)**
Inventor: **Muyle, Eddy
Tieltstraat 32
B-8870 Pittem (BE)**
Inventor: **Bergmans, Jean-Paul
Hoorndriesstraat 87
B-9220 Merelbeke (BE)**
Inventor: **Bergmans, Patrick
Klossebos 14
B-9710 Zwijnaarde (BE)**

(74) Representative: **De Brabanter, Maurice et al
Bureau VANDER HAEGHEN 63 Avenue de la
Toison d'Or
B-1060 Bruxelles (BE)**

Courier Press, Leamington Spa, England.

**0 096 677**

(56) References cited:
**IBM TECHNICAL DISCLOSURE BULLETIN, vol. 18, no..7, December 1975, pages 20672068, New York, USA J.L. GARCIA et al.: "Dual-motion linear actuator"**

**IBM TECHNICAL DISCLOSURE BULLETIN, vol. 20, no. 3, August 1977, pages 897, New York, USA W.E. BROOM et al.: "Printed-circuit linear actuator"**

**FEINWERKTECHNIK + MICRONIC, vol. 77, no. 4, May/June 1973, pages 151.157, Münich, DE. O.E. OLBRICH: "Aufbau und Kennwerte elektrodynamischer Linearmotoren als Positionierer für Plattenspeicher"**

## Description

This invention relates to an automatic scanning device suited for the optomechanical processing of a substrate covered with photosensitive material, by means of a light beam generated by a fixed light source and guided on said substrate by fixed optical components (3, 3') and mobile optical components supported by a scanning carriage equipped with a position detector and propelled by a motor along a rectilinear guide comprising a carriage position measuring device.

The invention finds numerous applications in the area of printing, cartography, medical imaging for the generation of graphical documents, as well as for the input and analysis of such documents, possibly for the purpose of converting the information of these documents into a digital form.

U.S. Patent 3,938,191 describes a photocomposition device in which a drum covered with a photosensitive sheet is illuminated or scanned by a data illumination head or a light responsive reading head mounted on the carriage or slide.

The carriage is supported on bearings that constrain movement in pitch, jaw and roll in order to avoid mechanical vibrations, backlash and wear. The exploring of the drum is carried out by scanning the sheet point by point, in a linear fashion, and transfering, as a function of a shaft encoder which monitors the drum rotation, the optical information to a computer which directs the analyzing beam.

In those devices, the scanning element, consisting of said carriage or slide, is driven by means of lead screws. The accuracy required, which is of the order of 1 micrometer, renders both the construction and the positioning control of these positioning systems complex and expensive. Furthermore, mechanical leadscrews incur mechanical wear, resulting in backlash and poor carriage positioning accuracy.

By German patent application DE—OS—2409476 a process is also known to produce pictures which are transmitted under the form of electrical or electromagnetical signals and to a device for embodying this process. Analogously to the present patent application, it discloses an automatic scanning device suited for the opto-mechanical processing of a substrate covered with photosensitive material, by means of optical components supported by a carriage propelled along a rectilinear guide by an electrical motor. Light source and optical components are analogous to these of the present patent application.

According to the process described in DE—OS—2409476, the carriage performs yet a jerky, step-wise linear motion.

In order to damp the transient oscillations caused by its irregular motion, the carriage is mounted on brake skids providing the indispensable friction.

Furthermore, the stepwise motion of the carriage precludes high rotational speeds of the drum, for instance much higher than 800 r.p.m.

The picture projected by the light beam on the photosensitive material of the rotative substrate consists of parallel circles generated by the revolution of the drum and the stepwise displacement of the carriage.

The drawbacks of this known automatic scanning device are the physical contact of the carriage.

European patent application EP—0052346 (Magnet BAHN) describes an electrical driving-device or generator suited for propelling along a rectilinear guide a carriage carried on rollers.

The driving device is a linear motor the stator of which comprises a sensor directly controlling a current source or sink. The sensor is connected with an electronic switching device controlling the excitation of the winding of said linear motor.

From claim 4, giving various examples of embodiments of sensors, such as Hall sensors, reed relays, photo-cells and ultra-sound switches, it can be deduced that the sensor which is used for exciting control of the scanning carriage is a sensor with a limited resolution power.

This sensor enables to follow the successive positions of the scanning device and to steer the commutator control but does not enable the operator of the scanning device to command the carriage to move accurately to a well predetermined position. It does not enable an accurate synchronization of the relative motions of the carriage and of the substrate when these motions occur continuously with a constant velocity.

The present invention remedies above drawbacks of mechanical leadscrews. It concerns an automatic scanning device suited for the opto-mechanical processing of a substrate covered with photo-sensitive material, by means of optical components supported by a mobile carriage moving along a rectlinear guide. The invention consists mainly of a light source which generates the synthesizing or analyzing beam, optical components allowing to direct and focus the beam generated by this light source onto a substrate; a computer, an optical position measuring device; and a linear motor composed of an electrical winding consisting of a number of isolated conductors, attached onto the rectilinear guide and orthogonal to the direction of motion. By means of a modulated current source and a solid state electronic commutator, the computer controls the current through the winding conductors, so as to propel the carriage which is equipped with a least one permanent magnet.

The support of the substrate consists of a cylindrical drum rotating around its central axis.

In a particular realization, the carriage is supported by at least one contactless bearing, preferably with pneumatic suspension.

In a particular realization of the linear motor, the winding is realized as a two-layer printed circuit board bearing two series of S-shaped patterns, one series on each side of the board, separated by a thin isolating layer form from a rectilinear guide with high magnetic permeability, to which the winding is attached.

The position measuring device is preferably an optical grating allowing a measurement accuracy of the order of one micrometer, and capable of transmitting its data to the computer mentioned above.

The invention also concerns a signal processing method for the opto-mechanical processing of a substrate covered with photo-sensitive material in a device as described above, primarily characterized by the fact that said carriage is positioned by means of a linear motor consisting of permanent magnets and a stationary winding in which a computer-controlled current is established.

The carriage position can be controlled with satisfactory results by means of, for example: an optical measuring device of the brand Heidenhain, consisting of an optical grating with a resolution of one micrometer, transmitting its data to the computer.

Particularly, in this invention the linear motor winding is realized using printed circuit board technology, on a thin layer of isolating material clad on both sides with a conducting material in which a patterns of conductors is engraved, orthogonal to the axis of the rectilinear guide.

To that end, both sides of a doubly copper-clad epoxy board are etched into a series of identical S shaped patterns, connected by "plating-through" at the extremities, so as to form a winding which is glued on the rectilinear guide.

Other particularities and details of the present invention will become apparent in the description of the attached drawings which, schematically and by no means restrictively, represent a particular realization of a device for the opto-mechanical processing of substrates according to the invention.

In those drawings:

— figure 1 shows a perspective view of an automatic scanning device according to the invention;

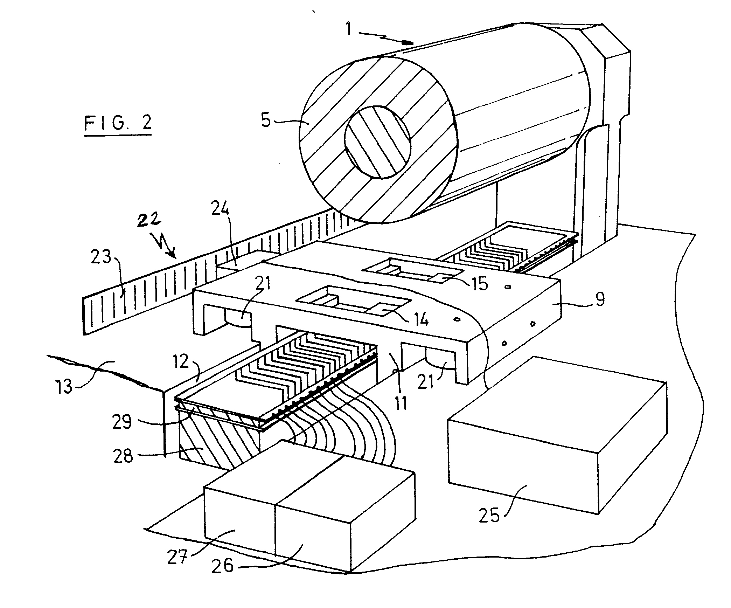

— figure 2 shows a perspective view of the scanning carriage of the device shown in figure 1;

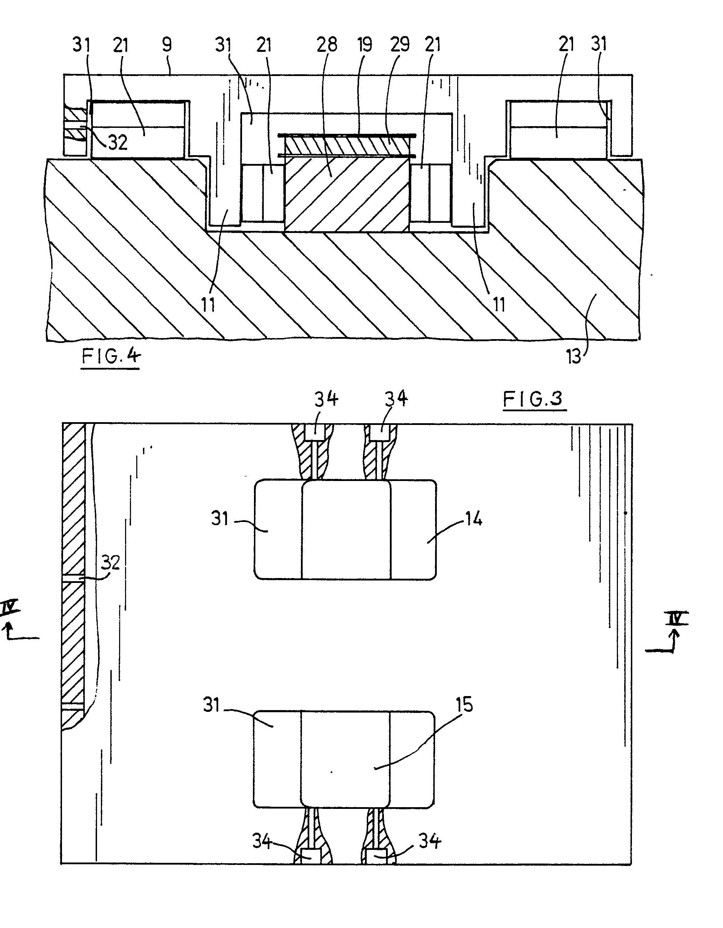

— figure 3 shows a plan view of the carriage depicted in figure 2;
— figure 4 is a cut-away view along the line IV—IV of the carriage shown in figure 3;
— figure 5 is a schematic view of a particular realization of the linear motor winding of the automatic scanning device of the invention.

In these various drawings, the same reference symbols refer to identical or similar objects.

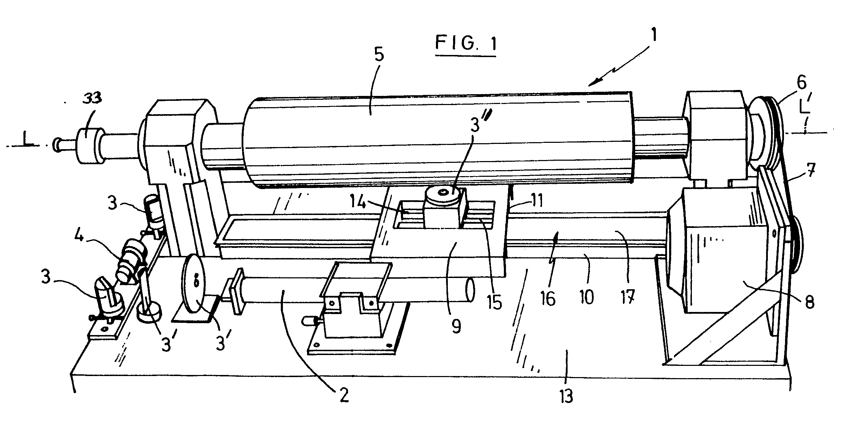

As shown in figure 1, the automatic scanning device of the invention, referred to in its entirety by reference (1), and intended for the opto-mechanical treatment of substances covered with photo-sensitive material, contains a light source (2) generating a light beam, for instance a laser source; optical components consisting of mirrors (3) and a lens (3'') intended to direct and focus the light beam of the laser source (2) onto a support (5). A beam expander (4) widens the light beam. The support consists of a cylindrical drum (5), rotating about its central axis LL' by means of a pulley (6) and a belt (7) driven by a motor (8). The position of said drum is measured by means of a shaft encoder. A scanning carriage (9) moveable along a rectilinear guide (10) directs the laser beam point by point onto the drum (5). The link between the carriage (9) and the rectilinear guide (10) is realized by means of lateral protrusions (11) of the carriage (9) lodged in a slot (12) of a granite base (13). The lateral protrusions (11) of the carriage are equipped with contactless pneumatic bearings guiding the carriage (9) along the rectilinear guide with high precision. The carriage (9) is equipped with two RES or FERRITE magnet assembles (14), (15) aligned with the winding pitch. These magnet groups (14), (15) compose the mobile part of a linear motor intended to actuate the carriage (9). The linear motor is referred to in its entirety by reference (16). It contains a winding (17) consisting a series of isolated conductors (18), etched according to printed circuit techniques into a thin copper-clad epoxy strip (19) which is attached to a back iron with a thickness of approximately 1 cm made of a highly-permeable soft magnetic material, for instance soft iron.

Each of the conductors (18) is connected to a current source (27) controlled by a computer (25). In this way, one can excite each of the conductors (18) in a preprogrammed way and so propel the carriage (9).

The linear motor (16) allows to accurately position the carriage (9) along the rectilinear guide (10) provided the conductors (18) forming the winding loops are sufficient in number. No mechanical contact whatsoever is necessary, and the carriage guidance can be realized by means of pneumatic bearing (21), even if the carriage weight exceeds 10 kilograms.

An optical measuring device, referred to in its whole through reference (22), consists of a grating of the brand Heidenhain (23), attached to the base (13). This grating (23) has a resolution of 1 micrometer. An optical detector (24) attached to the scanning carriage allows the positioning of the latter with a precision of the order of 2 micrometers.

The detector (24) transmits pulses which signal its position to a computer (25) linked to a solid state commutator (26) and a controllable current source (27). The detector output signal is digital, and is processed by a real-time control algorithm which transforms the signal into an excitation of the winding current, und the control of the solid state commutator.

The computer (25) guides the carriage (9) from one end of the rectilinear guide (10) to the other, with a speed which is tightly coupled to the drum rotational speed. The drum position is measured by a high precision shaft encoder (33).

The control computer controls and steers the excitation current. It allows the implementation off a doubly-integrating control algorithm.

Simultaneously, a second computer (not shown) modulates the laser light beam so as to project the desired image onto the rotating drum.

The transfer function of the position control algorithm is a rational function of S:

$$G(S) = \frac{K*(1+S*Td)}{(S**2)*(1+x*S*Td)}$$

where

S is the Laplace variable

Td is a differentiation constant

x is a small constant not exceeding 0.05

* denotes multiplication

**denotes exponentiation

This transfer function represents the digital control algorithm. It is realized on a computer (25), under the form of a recursive digital filter approximating the above transfer function, running in discrete time with a sampling rate of about 1 kHz.

Using a doubly-integrating control algorithm eliminates steady-state errors, even with a ramp reference input.

The use of a control computer (25) to implement the control algorithm permits the use of modern adaptive techniques taking into account the real dynamics of the carriage (9).

The base (13) of the machine (1) is made of polished granite, in which a longitudinal slot (12) is machined, lodging a rectilinear guide (28) bearing the winding (17) of the linear motor (16) and a yoke (29) of soft iron on which winding (17) of the linear motor (16) is glued.

The carriage (9) is connected to a source of compressed air (not shown) at about 4 kgs. per square centimeter, by means of a very flexible tube. The weight of the carriage (9) precludes vertical deviations from its course. The lateral protrusions (11) of the carriage, equipped with pneumatic sliding bearings (21), allow a high-precision lateral guidance of the carriage (9), even with slight variations of the pressure in the bearings (21). Furthermore, slight vertical deviations from the course of the carriage (9) do not influence the beam projection spot on the drum (5). The pneumatic bearings (21) of the carriage (9) are mounted in a bedlow space 31 and connected outside through the inlets (32).

The novel combination of pneumatic suspension and propulsions by means of a linear motor offers the following advantages:

— it eliminates all static friction and mechanical hysteresis, and avoids transmission of mechanical vibrations from the drum (5) to the carriage (9);
— it permits the use of a stable control algorithm devoid of limit cycles.

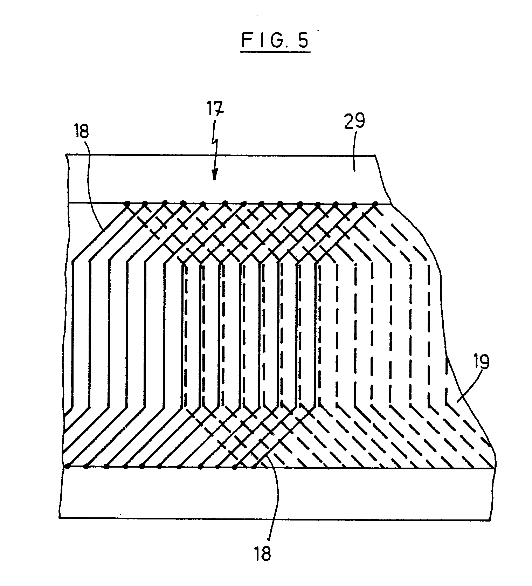

In the particular realization shown in figure 5, the winding (17) is realized by etching a thin epoxy board (possibly flexible), doubly clad with approximately 70 micrometers of copper.

Each winding loop consists of two identical S shaped patterns (18) on both sides of the board.

The winding pitch equals 25.4 millimeters or one inch. A back iron (29) with a thickness of 1 centimeter, preferably in a soft magnetic material with high permeability such as e.g. soft iron, closes the flux path of the magnetic field generated by the magnets (14), (15) of the carriage (9). The relative permeability of the back iron should be greater than 1,000.

Therefore, a relatively small field strength suffices to generate a sufficiently strong induction. The operation of the linear motor, like all electric motors, rests upon the interaction between a magnetic field and a conductor through which a current flows.

The individual winding loops are dimensioned so as to allow continuous operation at current levels of 5 Amperes.

With a pole area of 25.4 by 50 millimeters, an air gap of 0.5 millimeters yielding a field strength of 0.2 Tesla, the force exerted onto the carriage at a winding current of 5 Amperes is of the order of 1 Newton.

The electric time constant of the winding is smaller than 1 millisecond. As a matter of fact, a low winding time constant is required to achieve the desired positioning accuracy.

During operation, the linear motor generates very little heat, allowing a good dimensional stability of the whole.

The above linear motor achieves a positioning accuracy of about 2 micrometers at typical translation speeds of 1 millimeter per second. Meanwhile, the same linear motor can move as fast as 10 centimeters per second.

The control computer measures the actual carriage characteristics and adapts the coefficients of the control algorithm to these data.

In a particular realization, the winding (17) consists of 5 separate loops, each connected to a solid state commutator, with a pitch equalling the pole pitch (figure 5). The winding structure allows to control the magnitude and the sign of the velocity of the carriage by inverting the current through individual winding loops at precise instants in time.

It is obvious that the present invention is not limited to the above details, and that numerous alterations can be made without leaving the limits of the invention.

**Claims**

1. An automatic scanning device suited for the opto-mechanical processing of a substrate (5) covered with photosensitive material, by means of a light beam generated by a fixed light source (2) and guided on said substrate by fixed optical components (3, 3') and mobile optical components (3'') supported by a scanning carriage (9) equipped with a position detector (24) and propelled by a motor (16) along a rectilinear guide (10) comprising a carriage position measuring device (22), characterized in that it comprises an angular substrate position measuring device (33), a linear motor (16) and a control computer (25) connected on one hand to the detectors (24), (33) of both carriage and substrate position measuring devices (22), and on the other hand, through a solid state commutator (26) and a controllable current source (27), to said linear motor (16); said control computer (25) executing a digital integrating feedback real time control algorithm which transforms the position measurement data of said detector (24) into excitation currents of the winding of said linear motor (16) and controls instantaneously the position and the speed of said carriage (9) tightly locked to the position and speed of said substrate, so as to propel the carriage (9) in the controlled fashion.

2. A device according to claim 1, characterized by the use of pneumatic carriage support and guidance bearings (21).

3. A device according to any of claims 1 or 2, characterized by the use of an optical grating with a resolution of the order of one micrometer, and a detector (24) transmitting its data to said control computer (25), as the position measuring device (22).

4. A device according to any of above claims, characterized by the use of a magnetic grating or interferometic position measurement device with a resolution better than 1 micrometer.

5. A method to control and steer a scanning, and to process data projected onto a substrate (5) covered with photo-sensitive material in an automatic scanning device according to any of the above claims, characterized in that the scanning carriage (9) moves in a continuous motion tightly coupled to the movement of said substrate through the use of a linear motor (16), a position measuring device and a control computer (25) connected to the motor through a controllable current source (27) and a solid state commutator (26).

6. A method according to claim 5, characterized by the use of an optical grating with a resolution of the order of one micrometer and a detector (24) transmitting its data to said control computer (25), as the position measuring device (22).

**Patentansprüche**

1. Eine automatische Abtastanlage, die für die opto-mechanische Verarbeitung eines mit photosensitivem Material bedeckten Substrats (5) mittels eines Lichtbündels geeignet ist, das durch eine fest angeordnete Lichtquelle (2) erzeugt und auf das Substrat mittels fest angeordneter optischer Komponenten (3, 3') und beweglicher optischer Komponenten (3'') gerichtet wird, die auf einem Abtastwagen (9) angeordnet sind, der mit einem Lagedetektor (24) ausgerüstet und von einem Motor (16) längs einer geradlinigen Führung (10) angetrieben ist, die eine Lagemeßvorrichtung (22) für die Stellung des Wagens aufweist, dadurch gekennzeichnet, daß sie eine die Winkellage des Substrats messende Lagemeßvorrichtung (33), einen Linearmotor (16) und einen Steuercomputer (25) aufweist, der einerseits mit den Detektoren (24), (33) der Lagemeßvorrichtungen (22) sowohl des Wagens als auch des Substrats verbunden und andererseits über einen Festkörper-Kommutator (26) und eine steuerbare Stromquelle (27) mit dem Linearmotor (16) verbunden ist; und daß der Steuercomputer (25) einen digitalen, integrierenden Feedback-Steueralgorithmus in Echtzeit durchführt, der die Lagemeßdaten des Detektors (24) in Erregerströme der Wicklung des Linearmotors (16) umsetzt und augenblicklich die Stellung und Geschwindigkeit des Wagens (9) in fester verriegelung mit der Stellung und Geschwindigkeit des Substrats steuert, so daß der Wagen (9) in gesteuerter Weise angetrieben wird.

2. Anlage nach Anspruch 1, gekennzeichnet durch die Verwendung pneumatischer Trag- und Führungslager (21) für den Wagen.

3. Anlage nach Anuspruch 1 oder 2, gekennzeichnet durch die Verwendung eines optischen Gitters mit einer Auflösung in der Größenordnung eines Mikrometers sowie eines seine Daten auf den Steuercomputer (35) übertragenden Detektors (24) als Lagemeßvorrichtung (22).

4. Anlage nach einem der vorausgehenden Ansprüche, gekennzeichnet durch die Verwendung eines magnetischen Gitters oder einer interferometrischen Lagemeßvorrichtung mit einer Auflösung, die besser als ein Mikrometer ist.

5. Verfahren, um bei einer automatischen Abtastanlage gemäß einem der vorausgehenden Ansprüche einen Abtastvorgang zu überwachen und zu steuern und Daten zu verarbeiten, die auf ein mit photosensitivem Material bedecktes Substrat (5) projiziert werden, dadurch gekennzeichnet, daß der Abtastwagen (9) sich in einer kontinuierlichen Bewegung bewegt, die mit der Bewegung des Substrates durch die Anwendung eines Linearmotors (16), einer Lagemeßvorrichtung und eines Steuercomputers (25) fest gekoppelt ist, der mit dem Motor über eine steuerbare Stromquelle (27) und einen Festkörper-Kommutator (26) verbunden ist.

6. Verfahren nach Anspruch 5, gekennzeichnet durch die Verwendung eines optischen Gitters mit einer Auflösung in der Größenordnung eines Mikrometers und eines Detektors (24), der seine Daten auf den Steuercomputer (25) überträgt, als Lagemeßvorrichtung (22).

**Revendications**

1. Appareil à balayage automatique pour le traitement photomécanique de signaux sur un support (5) recouvert d'une matière photosensible, à l'aide d'un faisceau lumineux généré par une source de lumière fixe (2) et guidée sur le substrat par des éléments optiques (3, 3') fixes et des éléments optiques mobiles (3'') portés par un chariot de balayage (9) muni d'un détecteur de

**0 096 677**

position (24) et actionné par un moteur (16) le long d'un guide rectiligne (10) comprenant un appareil mesurant la position du chariot (22), caractérisé en ce qu'il comprend un appareil de mesure (33) de la position angulaire du support, un moteur linéaire (16) et un ordinateur de contrôle (25), relié d'une part aux détecteurs (24), (33) des deux appareils de mesure (22) de la position du chariot et du support, et d'autre part via un commutateur à l'état solide (26) et une source de courant réglable (27), audit moteur linéaire (16); ledit ordinateur de contrôle (25) réalisant un algorithme digital intégrant de contrôle à temps réel qui transforme les données des mesures de position dudit détecteur (2) en courants d'excitation de la bobine dudit moteur linéaire (16) et règle instantanément la position et la vitesse du chariot (9) étroitement lié à la position et à la vitesse dudit support, de manière à entraîner le chariot (9) de manière programmée, à l'aide d'un ordinateur.

2. Appareil suivant la revendication 1, caractérisé en ce que le chariot susdit est porté par un patin pneumatique de guidage (21).

3. Appareil suivant l'une quelconque des revendications 1 ou 2, caractérisé en ce que le dispositif de mesure optique susdit est constitué d'une latte graduée offrant un pouvoir de résolution de l'ordre du niveau et d'un détecteur (24) transmettant les signaux captés à l'ordinateur susdit (22).

4. Appareil suivant l'une quelconque des revendications précédentes, caractérisé en ce que la latte graduée magnétique ou l'appareil de mesure de la position par interférence a un pouvoir de résolution inférieur à 1 micron.

5. Procédé de contrôle et de régulation du balayage et du traitement photomécanique de signaux de code sur un support (5) recouvert d'une matière photosensible dans un appareil à balayage automatique suivant l'une quelconque des revendications précédentes, caractérisé en ce qu'on anime le chariot (9) susdit d'un mouvement continu étroitement lié au mouvement dudit support via l'emploi d'un moteur linéaire (16), un appareil de mesure de la position et un ordinateur de contrôle (25) relié au moteur au travers d'une source de courant réglable (27) et d'un commutateur (26) à l'état solide.

6. Procédé suivant la revendication 8, caractérisé en ce qu'on utilise en tant qu'appareil de mesure de la position (22) une latte graduée offrant un pourvoir de résolution de l'ordre du micron et un détecteur (24) qui transmet les signaux captés à l'ordinateur susdit (28).

FIG. 1

0 096 677

FIG. 2

31  21  9    31  21    28  19  29  21         21  31

32

FIG.4

11            11        13

34    34        FIG.3

31            14

32

IV

31        15

IV

34          34

## FIG. 5